(19) Europäisches Patentamt / European Patent Office / Office européen des brevets

(11) **EP 2 775 339 A1**

(12) **EUROPEAN PATENT APPLICATION**

(43) Date of publication:
**10.09.2014  Bulletin 2014/37**

(51) Int Cl.:
**G02B 27/01** (2006.01)  **G01C 21/36** (2006.01)
**G09G 5/00** (2006.01)

(21) Application number: **14153862.9**

(22) Date of filing: **04.02.2014**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **05.03.2013  JP 2013043505**

(71) Applicant: **Funai Electric Co., Ltd.
Daito-shi,
Osaka 574-0013 (JP)**

(72) Inventor: **Babaguchi, Yutaka
Daito-shi, Osaka 574-0013 (JP)**

(74) Representative: **Grünecker, Kinkeldey,
Stockmair & Schwanhäusser
Leopoldstrasse 4
80802 München (DE)**

(54)  **Headup display with background color detection**

(57)  This headup display (1) includes a projection portion projecting prescribed information (61b, 62b) initialized to a first display color on a display board (20) arranged in a user's gaze direction, a detection portion (120) detecting a background color visually recognized by the user through the display board, and a control portion (101) performing control of adjusting the first display color on the basis of the background color detected by the detection portion and the first display color and displaying the prescribed information in the adjusted display color.

FIG.5

DISPLAY COLOR ADJUSTMENT FLOW

START

S1 ACQUIRE BACKGROUND REGION

S2 CALCULATE BACKGROUND COLOR

S3 CALCULATE GRADATION DIFFERENCE BETWEEN FIRST DISPLAY COLOR AND BACKGROUND COLOR

S4 CALCULATE MIXING RATIO

S5 CALCULATE SECOND DISPLAY COLOR

S6 CALCULATE GRADATION DIFFERENCE BETWEEN SECOND DISPLAY COLORS OF CURRENT FRAME AND FRAME IMMEDIATELY PRECEDING CURRENT FRAME

S7 GRADATION DIFFERENCE ≥ PRESCRIBED VALUE? — No

Yes

S8 DISPLAY INFORMATION IN THIRD DISPLAY COLOR OBTAINED BY AVERAGING SECOND DISPLAY COLOR OF CURRENT FRAME WITH THAT OF FRAME PRECEDING CURRENT FRAME

S9 DISPLAY INFORMATION IN SECOND DISPLAY COLOR OF CURRENT FRAME

EP 2 775 339 A1

**Description**

BACKGROUND OF THE INVENTION

Field of the Invention

The present invention relates to a headup display and a display method for a headup display, and more particularly, it relates to a headup display including a detection portion detecting a background color and a display method for a headup display.

Description of the Background Art

A headup display including a detection portion detecting a background color is known in general, as disclosed in Japanese Patent Laying-Open No. 2010-149734, for example.

The aforementioned Japanese Patent Laying-Open No. 2010-149734 discloses a headup display including a windshield (display board) arranged in a user's gaze direction, a reflection member (projection portion) projecting prescribed information on the windshield and a background color detection means (detection portion) detecting a background color visually recognized by the user through the windshield. This headup display further includes a control portion performing control of acquiring the complementary color of the background color on the basis of the background color detected by the background color detection means and displaying the prescribed information in the complementary color of the background color.

However, the headup display according to the aforementioned Japanese Patent Laying-Open No. 2010-149734 displays the prescribed information in a display color (complementary color) based on the background color alone, and hence the display color is changed on the basis of the background color regardless of display content. Consequently, the headup display may disadvantageously display the prescribed information in a display color not in the least reflecting an originally initialized display color.

SUMMARY OF THE INVENTION

The present invention has been proposed in order to solve the aforementioned problem, and an object of the present invention is to provide a headup display capable of improving visual recognizability while reflecting an original display color and a display method for a headup display.

A headup display according to a first aspect of the present invention includes a projection portion projecting prescribed information initialized to a first display color on a display board arranged in a user's gaze direction, a detection portion detecting a background color visually recognized by the user through the display board, and a control portion performing control of adjusting the first display color on the basis of the background color detected by the detection portion and the first display color and displaying the prescribed information in the adjusted display color. According to the present invention, the "headup display" indicates a wide concept including not only that loaded on a transportation apparatus such as a car or an aircraft but also that attached to the user's head so that the display board is arrangeable in the user's gaze direction. According to the present invention, the "display board" indicates a wide concept including not only a plate-shaped display board, but also a windshield of a transportation apparatus such as a car or an aircraft.

As hereinabove described, the headup display according to the first aspect of the present invention is provided with the control portion performing the control of adjusting the first display color on the basis of the background color detected by the detection portion and the initialized first display color and displaying the prescribed information in the adjusted color, whereby the same can adjust the first display color to be easily visually recognizable and display the prescribed information in the adjusted display color by adding the background color detected by the detection portion to the basic first display color originally initialized in the headup display. Thus, the headup display can improve visual recognizability while reflecting the original display color.

In the aforementioned headup display according to the first aspect, the control portion is preferably configured to perform control of adjusting the first display color to a second display color on the basis of the difference between the background color detected by the detection portion and the first display color and displaying the prescribed information in the second display color. According to this structure, the control portion can properly adjust the first display color to the second display color on the basis of the first display color to correspond to the difference (distinction) between the background color and the first display color, whereby the same can improve the visual recognizability while displaying information in a display color suitable to the display content. According to the present invention, the "difference between the background color and the first display color" indicates a wide concept including not only the gradation difference between the background color and the first display color but also the difference between the background color and the first display color based on color information other than the gradation.

In this case, the control portion is preferably configured to perform the control of adjusting the first display color to the second display color by acquiring the complementary color of the background color and mixing the acquired complementary color of the background color and the first display color with each other on the basis of the difference between the background color and the first display color and displaying the prescribed information in the second display color. According to this structure, the control portion can adjust the first display color to the second display color by mixing the complementary color most easily visually recognizable with respect to the background color to the first display color, whereby the same can further improve the visual recognizability while displaying information in a display color suitable to the display content.

In the aforementioned headup display according to the first aspect, the first display color is preferably initialized by employing at least one of components of three colors of red, blue and green, the detection portion is preferably configured to detect the background color with at least one of the components of the three colors, and the control portion is preferably configured to perform control of adjusting the first display color by employing at least one of the components of the three colors on the basis of the background color detected by the detection portion with at least one of the components of the three colors and the first display color initialized by employing at least one of the components of the three colors and displaying the prescribed information in the adjusted display color. According to this structure, the control portion can adjust the first display color to be easily visually recognizable by employing a larger number of colors and display the prescribed information in the adjusted display color.

In the aforementioned structure of mixing the complementary color of the background color and the first display color with each other, the control portion is preferably configured to perform control of calculating a mixing ratio for mixing the acquired complementary color of the background color and the first display color with each other on the basis of the difference between the background color and the first display color and mixing the complementary color of the background color and the first display color with each other on the basis of the calculated mixing ratio. According to this structure, the control portion changes the mixing ratio for mixing the complementary color of the background color and the first display color with each other in response to the difference between the background color and the first display color, whereby the same can adjust the display color while balancing a color suitable to the display content and a color excellent in visual recognizability with respect to the background color.

In the aforementioned structure of calculating the mixing ratio for mixing the complementary color of the background color and the first display color with each other, the control portion is preferably configured to perform control of calculating the mixing ratio by dividing the gradation difference between the first display color and the background color by the gradation difference, corresponding to the maximum gradation difference, between a prescribed color and the complementary color of the prescribed color and mixing the complementary color of the background color and the first display color with each other in response to the mixing ratio. According to this structure, the control portion can more easily adjust the display color while balancing the color suitable to the display content and the color excellent in visual recognizability with respect to the background color on the basis of a case where the gradation difference between the first display color and the background color is the maximum gradation difference.

In the aforementioned structure of calculating the mixing ratio by dividing the gradation difference between the first display color and the background color by the maximum gradation difference, the first display color is preferably initialized by employing at least one of components of three colors of red, blue and green, the detection portion is preferably configured to detect the background color with at least one of the components of the three colors, and the control portion is preferably configured to perform the control of calculating the mixing ratio by calculating the square root of the sum of the squares of gradation differences between the respective ones of the three colors from the gradation difference between the first display color and the background color in the respective ones of the three colors and dividing the calculated square root of the sum of the squares by the maximum gradation difference. According to this structure, the control portion can calculate a proper mixing ratio from the square root of the sum of the squares of the gradation differences between the respective ones of the three colors.

In the aforementioned headup display according to the first aspect, the control portion is preferably so configured, when the gradation difference between a second display color of a prescribed frame and the second display color of a frame immediately preceding the prescribed frame is at least a prescribed value, as to perform control of adjusting the second display color of the prescribed frame to a display color between the second display color of the prescribed frame and the second display color of the frame immediately preceding the prescribed frame and displaying the prescribed information in the adjusted display color. According to this structure, the control portion can absorb an abrupt change in the display color in consideration of the second display color of the frame immediately preceding the prescribed frame also when the background (background color) abruptly changes, whereby the same can reduce uncomfortableness of the user.

In this case, the control portion is preferably configured to perform control of adjusting a display color of the prescribed frame to the second display color and displaying the prescribed information in the second display color when the gradation difference between the second display color of the prescribed frame and the second display color of the frame immediately preceding the prescribed frame is less than the prescribed value. According to this structure, the control portion can properly adjust the first display color to the second display color when the background (background color) does not abruptly change.

In the aforementioned structure of adjusting the second display color of the prescribed frame to the display color between the second display colors of the prescribed frame and the frame immediately preceding the prescribed frame and displaying the prescribed information in the adjusted display color, the control portion is preferably configured to perform control of averaging the second display color of the prescribed frame with the second display color of the frame immediately preceding the prescribed frame, adjusting the second display color to a third display color and displaying the prescribed information in the third display color when the gradation difference between the second display color of the prescribed frame and the second display color of the frame immediately preceding the prescribed frame is at least the prescribed value. According to this structure, the control portion can adjust the second display color of the prescribed frame to a color (third display color) intermediate between the second display colors of the prescribed frame and the frame immediately preceding the prescribed frame, whereby the same can effectively reduce uncomfortableness of the user.

In the aforementioned headup display according to the first aspect, the projection portion is preferably configured to be capable of projecting a plurality of different informations on the display board, and the control portion is preferably configured to perform control capable of independently adjusting the first display color every plurality of different informations and displaying the informations in the adjusted display color when displaying the plurality of different informations. According to this structure, the control portion can independently adjust the first display color to be easily visually recognizable and display the informations in the adjusted display color every plurality of different informations also in the case of displaying the plurality of different informations.

In the aforementioned headup display according to the first aspect, the detection portion preferably detects the background color visually recognized by the user at a prescribed time interval, and the control portion is preferably configured to perform control of adjusting the first display color on the basis of the background color detected by the detection portion at the prescribed time interval and the first display color and displaying the prescribed information in the adjusted display color. According to this structure, the control portion can adjust the first display color to be easily visually recognizable and display the prescribed information in the adjusted display color by adding the background color changing with time to the first display color also when the background momently changes with time.

In the aforementioned headup display according to the first aspect, the display board is preferably a windshield of a car arranged in the user's gaze direction, and the control portion is preferably configured to perform control of adjusting the first display color on the basis of the background color detected by the detection portion and the first display color and displaying the prescribed information on the windshield in the adjusted display color. According to this structure, the control portion can adjust the first display color to be easily visually recognizable by adding the background color detected by the detection portion to the basic first display color originally initialized in the headup display and display the prescribed information in the adjusted display color also when the headup display is provided on the car.

In this case, the control portion is preferably so configured, at least when detecting occurrence of an abnormality in the car, as to interrupt the control of adjusting the first display color on the basis of the background color detected by the detection portion and the first display color and displaying the prescribed information in the adjusted display color and to preferentially display information related to the abnormality. According to this structure, the control portion can easily provide the user with the information related to the abnormality upon the occurrence of the abnormality in the car.

A display method for a headup display according to a second aspect of the present invention includes steps of projecting prescribed information initialized to a first display color on a display board arranged in a user's gaze direction, detecting a background color visually recognized by the user through the display board with a detection portion, and adjusting the first display color on the basis of the background color detected by the detection portion and the first display color and displaying the prescribed information in the adjusted display color.

As hereinabove described, the display method for a headup display according to the second aspect of the present invention is provided with the step of adjusting the first display color on the basis of the background color detected by the detection portion and the initialized first display color and displaying the prescribed information in the adjusted display color, whereby the first display color can be adjusted to be easily visually recognizable and the prescribed information can be displayed in the adjusted display color by adding the background color detected by the detection portion to the basic first display color originally initialized in the headup display. Thus, visual recognizability can be improved while reflecting the original display color.

According to the present invention, as hereinabove described, visual recognizability can be improved while reflecting the original display color.

The foregoing and other objects, features, aspects and advantages of the present invention will become more apparent from the following detailed description of the present invention when taken in conjunction with the accompanying drawings.

BRIEF DESCRIPTION OF THE DRAWINGS

Fig. 1 illustrates a used state of an HUD according to an embodiment of the present invention;
Fig. 2 illustrates information projected on a windshield by the HUD according to the embodiment of the present invention;
Fig. 3 is a block diagram showing the structure of the HUD according to the embodiment of the present invention;
Fig. 4 illustrates a state of calculating a second display color in the HUD according to the embodiment of the present invention;
Fig. 5 is a flow chart for illustrating display color adjustment processing in the HUD according to the embodiment of the present invention; and
Fig. 6 illustrates an HUD according to a modification of the embodiment of the present invention.

DESCRIPTION OF THE PREFERRED EMBODIMENTS

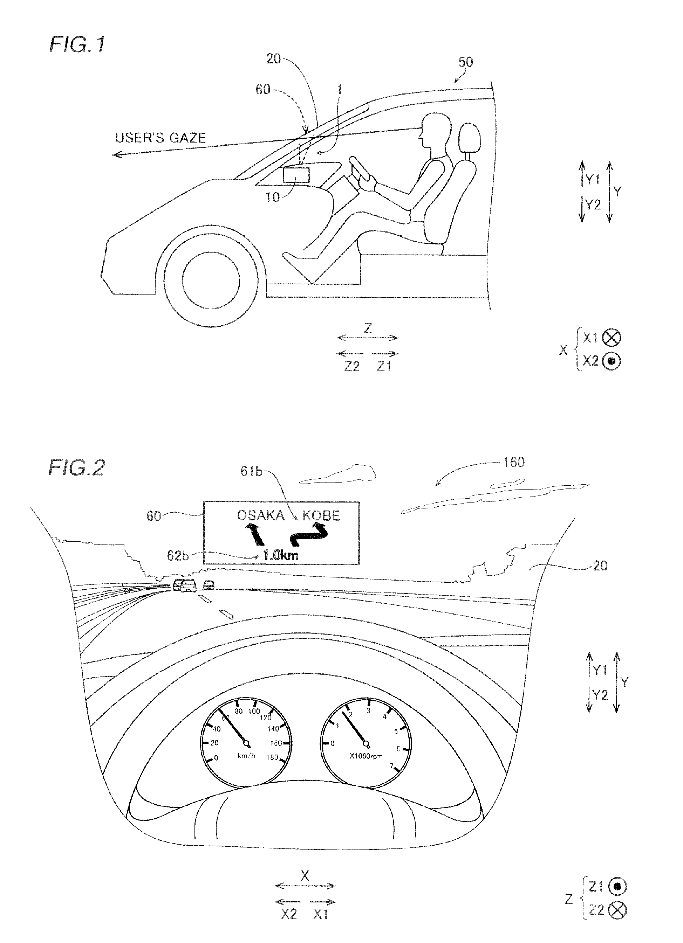

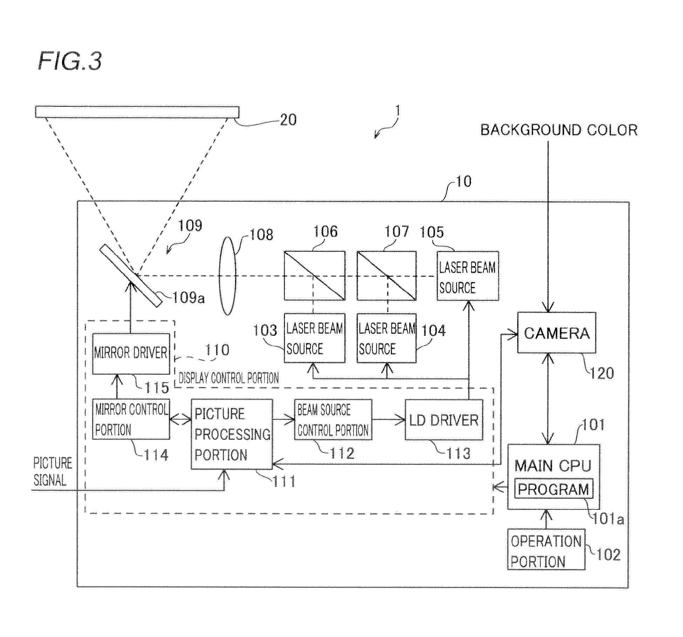

An embodiment of the present invention is now described with reference to the drawings.
First, the structure of an HUD (headup display) 1 according to the embodiment of the present invention is described with reference to Figs. 1 to 4.
The HUD 1 according to the embodiment of the present invention is configured to be built into (loaded on) a transportation apparatus such as a car 50, as shown in Fig. 1. The HUD 1 includes a projector portion 10 projecting information and a transparent windshield 20 arranged in front of the user's gaze (in a gaze direction). The HUD 1 has a function of displaying car navigation information (information on the route to the destination, for example), car information (fuel consumption information, for example) and the like on the on the windshield 20, as shown in Fig. 2. Referring to Fig. 2, the HUD 1 displays information 61b on the road diverging into routes toward Osaka and Kobe and information 62b on the distance (1.0 km) from the current location of the car 50 to the diverging point, for example. The color of the information 61b (route information "Osaka" and "Kobe" and arrows indicating the routes to the respective destinations) is initially set to blue-green. On the other hand, the color of the information 62b (distance information (1.0 km)) is initially set to green. The informations 61b and 62b are displayed on a display region 60 of the windshield 20, on positions corresponding to the user's (driver's) gaze. The HUD 1 is configured to be mounted on the car 50 in the process of manufacturing thereof. The windshield 20 is an example of the "display board" in the present invention. According to this embodiment, "transparent" indicates a wide concept including not only a transparent state but also a semitransparent state.
As shown in Fig. 3, the HUD 1 (projector portion 10) includes a laser beam scanning portion 109 projecting the prescribed informations 61b and 62b initialized to first display colors on the windshield 20, a camera 120 detecting background colors of a background 160 visually recognized by the user through the windshield 20, and a main CPU 101 performing control of adjusting the first display colors on the basis of the background colors detected by the camera 120 and the first display colors and displaying the informations 61b and 62b in the adjusted display colors. More detailedly, the HUD 1 (projector portion 10) includes the main CPU 101, an operation portion 102, three (blue (B), green (G) and red (R)) laser beam sources 103 to 105, two polarizing beam splitters 106 and 107, a lens 108, the laser beam scanning portion 109 and a display control portion 110. The informations 61b and 62b such as characters and images projected on the windshield 20 (see Fig. 1) are formed by the laser beam sources 103 to 105 for image formation. The laser beam scanning portion 109 includes an MEMS (Micro Electro Mechanical System) mirror 109b. The laser beam scanning portion 109 is configured to scan laser beams on the windshield 20. The display control portion 110 includes a picture processing portion 111, a beam source control portion 112, an LD (laser diode) driver 113, a mirror control portion 114 and a mirror driver 115. The HUD 1 (projector portion 10) is configured to output the informations 61b and 62b on the basis of picture signals input in the picture processing portion 111. The HUD 1 (projector portion 10) also includes the camera 120. The camera 120 is an example of the "detection portion" in the present invention. The main CPU 101 is an example of the "control portion" in the present invention. The laser beam scanning portion 109 is an example of the "projection portion" in the present invention.
The main CPU 101 is configured to control the respective portions of the HUD 1 (projector portion 10). The operation portion 102 is provided for accepting operations of turning on the HUD 1 (projector portion 10), changing projection angles for the informations 61b and 62b, changing the gradations of the informations 61b and 62b and the like. The laser beam source 103 is configured to apply a blue laser beam to the MEMS mirror 109a through the beam splitter 107 and the lens 108. The laser beam sources 104 and 105 are configured to apply green and red laser beams to the MEMS mirror 109a through the beam splitters 107 and 106 and the lens 108 respectively. The details of the main CPU 101 are described later.
The laser beam scanning portion 109 is configured to project the laser beams on the windshield 20. More specifically, the laser beam scanning portion 109 is so configured that the MEMS mirror 109a thereof scans the laser beams emitted from the laser beam sources 103 to 105 and projects the informations 61b and 62b on the windshield 20 (display region 60). The MEMS mirror 109a is configured to scan the laser beams along two axes in the horizontal direction (X direction) and the vertical direction (Y direction), as shown in Fig. 2. Further, the MEMS mirror 109a is configured to scan the horizontal direction at a high speed by resonance driving and to scan the vertical direction at a low speed by DC driving.

The picture processing portion 111 is configured to control the projection of the informations 61b and 62b on the basis of externally received picture signals. More specifically, the picture processing portion 111 is configured to control driving of the MEMS mirror 109a through the mirror control portion 114 and to control the application of the laser beams by the laser beam sources 103 to 105 through the beam source control portion 112 on the basis of the externally received picture signals.

The beam source control portion 112 is configured to control the application of the laser beams by the laser beam sources 103 to 105 by controlling the LD driver 113 on the basis of the control by the picture processing portion 111. More specifically, the beam source control portion 112 is configured to control the laser beam sources 103 to 105 to apply laser beams of colors corresponding to pixels of the informations 61b and 62b in timing with the scanning of the MEMS mirror 109a.

The mirror control portion 114 is configured to control driving of the MEMS mirror 109a by controlling the mirror driver 115 on the basis of the control by the picture processing portion 111.

According to this embodiment, the camera 120 is configured to detect the background colors of the background 160 corresponding to the position of the display region 60 in front of the car 50 (along arrow Z1). More specifically, the camera 120 is configured to detect the background colors as gradations (256 gradations, for example). Further, the camera 120 is configured to detect components of R, G and B as the background colors respectively.

According to this embodiment, the main CPU 101 is configured to perform the control of projecting the informations 61b and 62b on the display region 60 of the windshield 20. Further, the main CPU 101 is configured to perform control of acquiring background colors of a background region 61a corresponding to the information 61b and a background region 62a corresponding to the information 62b on the basis of information detected by the camera 120.

In addition, the main CPU 101 is configured to perform control of adjusting the first display colors to second display colors on the basis of the differences between the background colors detected by the camera 120 and the first display colors and displaying the informations 61b and 62b in the second display colors. Further, the main CPU 101 is configured to perform control of acquiring the complementary colors of the background colors, adjusting the first display colors to second display colors by mixing the acquired complementary colors of the background colors and the first display colors with each other and displaying the informations 61b and 62b in the second display colors.

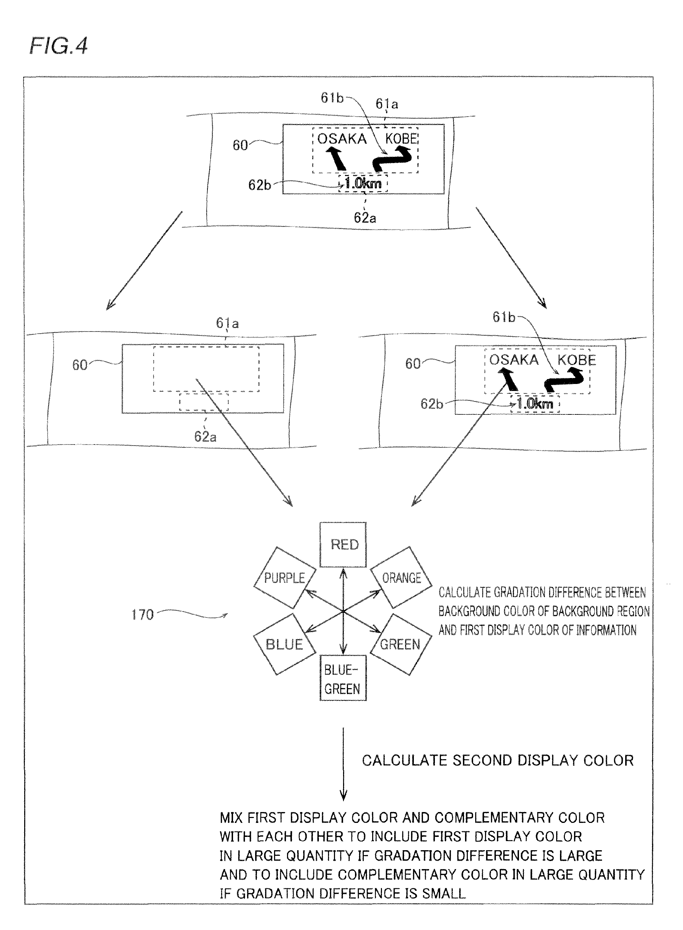

More specifically, the main CPU 101 is configured to perform control of acquiring the complementary colors of the respective background colors of the background regions 61a and 62b on the basis of the information (gradations) of the background regions 61a and 62a (background 160) detected by the camera 120. Further, the main CPU 101 is configured to perform control of adjusting the first display color of the information 61b to the second display color by mixing the acquired complementary color of the background color of the background region 61a and the first display color of the information 61b with each other and displaying the information 61b in the second display color. In addition, the main CPU 101 is configured to perform control of adjusting the first display color of the information 62b to the second display color by mixing the acquired complementary color of the background color of the background region 62b and the first display color of the information 62b with each other and displaying the information 62b in the second display color. In other words, the main CPU 101 is capable of independently adjusting first display colors every plurality of different informations 61b and 62b and displaying the informations 61b and 62b in the adjusted display colors when displaying the plurality of informations 61b and 62b. Further, the main CPU 101 is configured to acquire the complementary colors of the background colors on the basis of a hue circle 170 (see Fig. 4). The main CPU 101 adjusts the respective display colors of the informations 61b and 62b in manners similar to each other, and hence the following description is made on the adjustment of the display color of the information 61b, and redundant description is omitted as to the information 62b.

The main CPU 101 is configured to perform control of calculating a mixing ratio $\alpha$ for mixing the acquired complementary color of the background color and the first display color with each other on the basis of the difference (gradation difference) between the background color and the first display color and mixing the complementary color of the background color and the first display color with each other on the basis of the calculated mixing ratio $\alpha$. Further, the main CPU 101 is configured to perform control of calculating the mixing ratio $\alpha$ by dividing the gradation difference between the first display color and the background color by the maximum gradation difference and mixing the complementary color of the background color and the first display color with each other in response to the mixing ratio $\alpha$. The "maximum gradation difference" indicates a concept for the gradation difference (gradation difference between colors most separated from each other in the hue circle 170 (see Fig. 4)) between a prescribed color (red, for example) and the complementary color (blue-green, for example) of the prescribed color.

More specifically, the main CPU 101 acquires the background color (averaged background color) of the background region 61a by averaging the ratios of R, G and B in the background region 61a detected by the camera 120 in the background region 61a according to the following equation (1). More detailedly, the main CPU 101 calculates the mixing ratio $\alpha$ by calculating the square root of the sum of the squares of gradation differences between the respective ones of R, G and B from the gradation differences between the first display color and the background color in the respective ones of R, G and B and dividing the calculated square root of the sum of the squares by the maximum gradation difference. In the equation (1), AB represents the area of the background region 61a, and I(i,j) represents a pixel value (gradation) on a position (i,j) in the background region 61a respectively.

$$\text{background color} = \frac{1}{AB}\sum_{i=0}^{A} \sum_{j=0}^{B} I(i, j) \ldots (1)$$

Then, the main CPU 101 calculates the gradation difference $d_c$ between the background color of the background region 61a and the first display color of the information 61b. More specifically, the main CPU 101 acquires differences $R_2 - R_1$, $G_2 - G_1$ and $B_2 - B_1$ between R, G and B in the background color of the background region 61a and the first display color of the information 61b according to the following equation (2). Then, the main CPU 101 squares the differences $R_2 - R_1$, $G_2 - G_1$ and $B_2 - B_1$ respectively, and acquires the square root of the sum of the squared components as the gradation difference $d_c$. In the equation (2), $R_1$, $G_1$ and $B_1$ represent initialized first display colors, and $R_2$, $G_2$ and $B_2$ represent background colors respectively.

$$d_c = \sqrt{(R_2 - R_1)^2 + (G_2 - G_1)^2 + (B_2 - B_1)^2} \ldots (2)$$

Further, the main CPU 101 acquires the mixing ratio $\alpha$ for mixing the complementary color of the background color of the background region 61a and the first display color of the information 61b with each other. More specifically, the main CPU 101 acquires the mixing ratio $\alpha$ for mixing the complementary color of the background color and the first display color with each other by dividing the gradation difference $d_c$ between the background color of the background region 61a and the first display color of the information 61b by the maximum gradation $d_{cmax}$ according to the following equation (3). In the equation (3), $d_{cmax}$ represents the (maximum) gradation difference between colors most separated from each other in the hue circle 170.

$$\alpha = d_c / d_{cmax} \ldots (3)$$

The main CPU 101 is configured to perform control of mixing the complementary color of the background color of the background region 61a and the first display color of the information 61b with each other and acquiring a second display color adjusted from the first display color according to the first equation (4). In the equation (4), $R_{dst}$, $G_{dst}$ and $B_{dst}$ represent second display colors and $R_3$, $G_3$ and $B_3$ represent complementary colors of background colors respectively.

$$(R_{dst}, G_{dst}, B_{dst}) = (\alpha R_1 + (1 - \alpha)R_3, \alpha G_1 + (1 - \alpha)G_3, \alpha B_1 + (1 - \alpha)B_3) \ldots (4)$$

In this case, the main CPU 101 is configured to perform control of determining that the initialized first display color of the information 61b and the background color of the background region 61a are easily distinguishable from each other (the first display color is easily visually recognizable) when the color (gradation) difference between the first display color of the information 61b and the background color of the background region 61a is large ($d_c$ is at a large value) and mixing the first display color of the information 61b and the complementary color of the background color of the background region 61a with each other so that the initialized first display color of the information 61b is at a large ratio and the complementary color of the background color of the background region 61a is at a small ratio ($\alpha$ is large). Further, the main CPU 101 is configured to perform control of determining that the initialized first display color of the information 61b and the background color of the background region 61a are not easily distinguishable from each other (the first display color is not easily visually recognizable) when the color (gradation) difference between the first display color of the information 61b and the background color of the background region 61a is small ($d_c$ is at a small value) and mixing the first display color of the information 61b and the complementary color of the background color of the background region 61a with each other so that the initialized first display color of the information 61b is at a small ratio and the complementary color of the background color of the background region 61a is at a large ratio ($\alpha$ is small). In other words, the main CPU 101 is configured to perform control of determining color (gradation) closeness between the first display color and the background color and mixing the complementary color of the background 160 to the first display color in a large quantity (setting the mixing ratio $\alpha$ to a small value) when the color (gradation) difference between the first display color and the background color is small (the first display color and the background color are close to each other).

Referring to Fig. 2, the main CPU 101 acquires the complementary color (orange) of the color (blue) of the sky backgrounding the background region 61 of the information 61b ("Osaka", "Kobe" and arrows indicating the routes to the respective destinations) initially set to the first display color (blue-green) on the basis of the hue circle 170 (see Fig. 4), for example. The main CPU 101 is configured to perform control of adjusting the first display color to a color (between orange and blue-green) between the complementary color and the first display color by mixing the acquired complementary color (orange) and the first display color (blue-green) with each other at the prescribed mixing ratio $\alpha$ and displaying the information 61b in the adjusted color.

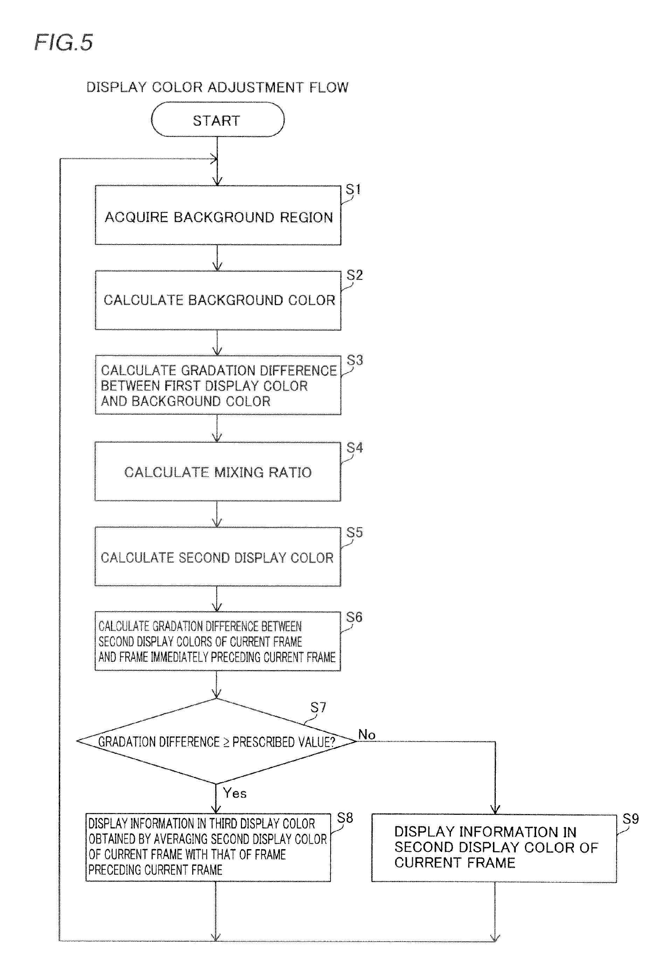

Further, the main CPU 101 is configured to perform control of averaging the second display color of a prescribed (current) frame with that of a frame immediately preceding the prescribed frame, adjusting the second display color to a third display color and displaying the information 61b in the third display color when the gradation difference between the second display colors of the prescribed frame and the frame immediately preceding the same is at least a prescribed value (220, for example). More specifically, the main CPU 101 is configured to perform control of adjusting the second display color of the prescribed frame to the third display color as a color intermediate between the second display colors of the prescribed frame and the frame immediately preceding the same and displaying the information 61b in the third display color. For example, the main CPU 101 is configured to perform control of adjusting the display color of the information 61b of the prescribed frame to orange as the third display color and displaying the information 61b in orange when the second display color of the information 61b of the prescribed frame is red and the second display color of the information 61b of the frame immediately preceding the prescribed frame is green. The main CPU 101 executes a display color adjustment processing flow shown in Fig. 5 in real time (at a prescribed time interval of 1 second, for example), and is configured to perform control of acquiring one frame every cycle of the aforementioned display color adjustment processing flow.

The main CPU 101 is configured to perform control of preferentially displaying information (information indicating a malfunction of the car 50 or disaster information, for example) related to an abnormality upon occurrence of the abnormality. The main CPU 101 is configured to interrupt the control of adjusting the first display color on the basis of the background color detected by the camera 120 and the first display color and displaying the information 61b in the adjusted display color at this time. The main CPU 101 includes a control program 101a therefor.

Display color adjustment processing performed by the main CPU 101 of the HUD 1 according to this embodiment by running the program 101a is now described with reference to Fig. 5.

First, the main CPU 101 acquires the background 160 corresponding to the position of the display region 60 (background region 61a) at a step S1. Then, the main CPU 101 calculates the background color corresponding to the position of the display region 60 (background region 61a) at a step S2. More specifically, the main CPU 101 acquires an averaged background color of the background region 61a by averaging the ratios of R, G and B detected in the background region 61a according to the equation (1).

Then, the main CPU 101 calculates the gradation difference between the first display color of the information 61b and the background color of the background region 61 at a step S3. More specifically, the main CPU 101 calculates the gradation difference between the first display color of the information 61b and the background color of the background region 61 on the basis of the hue circle 170 (see Fig. 4).

Then, the main CPU 101 acquires the mixing ratio $\alpha$ for mixing the complementary color of the background color of the background region 61a and the first display color of the information 61b with each other at a step S4. More specifically, the main CPU 101 calculates the mixing ratio $\alpha$ by dividing the gradation difference $d_c$ between the background color of the background region 61a and the first display color of the information 61b by the (maximum) gradation difference $d_{cmax}$ between the colors most separated from each other in the hue circle 170.

Then, the main CPU 101 calculates the second display color for adjusting the first display color at a step S5. More specifically, the main CPU 101 calculates the second display color by mixing the first display color of the information 61b and the complementary color of the background color of the background region 61a with each other at the mixing ratio α calculated at the step S4.

Then, the main CPU 101 calculates the gradation difference between the second display colors of the prescribed (current) frame and the frame immediately preceding the same at a step S6. Then, the main CPU 101 determines whether or not the gradation difference between the second display colors of the prescribed frame and the frame immediately preceding the same is at least the prescribed value (220, for example) at a step S7. If determining that the gradation difference between the second display colors of the prescribed frame and the frame immediately preceding the same is at least the prescribed value (220, for example), the main CPU 101 advances to a step S8. If not determining that the gradation difference between the second display colors of the prescribed frame and the frame immediately preceding the same is at least the prescribed value (220, for example) (if determining that the gradation difference is less than 220, for example), on the other hand, the main CPU 101 advances to a step S9.

At the step S8, the main CPU 101 averages the second display color of the prescribed (current) frame with the second display color of the frame immediately preceding the prescribed frame, adjusts the same to a third display color and displays the information 61b in the third display color. Thereafter the main CPU 101 returns to the step S1.

At the step S9, the main CPU 101 displays the information 61b in the second display color of the prescribed (current) frame as such (in an unadjusted state). Thereafter the main CPU 101 returns to the step S1.

According to this embodiment, as hereinabove described, the HUD 1 is provided with the main CPU 101 performing the control of adjusting the first display color on the basis of the background color detected by the camera 120 and the initialized first color and displaying the information in the adjusted display color. Thus, the main CPU 101 can adjust the first display color to be easily visually recognizable by adding the background color detected by the camera 120 to the basic first display color originally initialized in the HUD 1 and display the information in the adjusted display color. Therefore, the main CPU 101 can improve visual recognizability of the informations 61b and 62b while reflecting the original display colors.

According to this embodiment, as hereinabove described, the main CPU 101 is configured to perform the control of properly adjusting the first display color to the second display color on the basis of the first display color to correspond to the difference between the background color detected by the camera 120 and the first display color and displaying the information in the second display color. Thus, the main CPU 101 can adjust the first display color to the second display color in consideration of the difference (distinction) between the background color and the first display color, whereby the same can further improve the visual recognizability of the informations 61b and 62b while displaying the informations 61b and 62b in display colors suitable to the display contents.

According to this embodiment, as hereinabove described, the main CPU 101 is configured to perform the control of adjusting the first display color to the second display color by acquiring the complementary color of the background color and mixing the acquired complementary color of the background color and the first display color with each other on the basis of the difference between the background color and the first display color and displaying the information in the second display color. Thus, the main CPU 101 can adjust the first display color to the second display color by mixing the complementary color most easily visually recognizable with respect to the background color to the first display color, whereby the same can further improve the visual recognizability of the informations 61b and 62b while displaying the informations 61b and 62b in the display colors suitable to the display contents.

According to this embodiment, as hereinabove described, the first display color is initialized by employing the components of the three colors of red, blue and green, the camera 120 is configured to detect the background color with the components of the three colors, and the main CPU 101 is configured to perform the control of adjusting the first display color by employing the components of the three colors on the basis of the background color detected by the camera 120 with the components of the three colors and the first display color initialized by employing the components of the three colors and displaying the information in the adjusted display color. Thus, the main CPU 101 can adjust the first display color to be easily visually recognizable by employing a larger number of colors and display the information in the adjusted display color.

According to this embodiment, as hereinabove described, the main CPU 101 is configured to perform the control of calculating the mixing ratio α for mixing the acquired complementary color of the background color and the first display color with each other on the basis of the difference between the background color and the first display color and mixing the complementary color of the background color and the first display color with each other on the basis of the calculated mixing ratio α. Thus, the main CPU 101 changes the mixing ratio α for mixing the complementary color of the background color and the first display color with each other in response to the difference between the background color and the first display color, whereby the same can adjust the display color while balancing a color suitable to the display content and a color excellent in visual recognizability with respect to the background color.

According to this embodiment, as hereinabove described, the main CPU 101 is configured to perform the control of calculating the mixing ratio α by dividing the gradation difference between the first display color and the background color by the gradation difference, corresponding to the maximum gradation difference, between the prescribed color and the complementary color of the prescribed color and mixing the complementary color of the background color and the first display color with each other in response to the mixing ratio α. Thus, the main CPU 101 can more easily adjust the display color while balancing the color suitable to the display content and the color excellent in visual recognizability with respect to the background color on the basis of a case where the gradation difference between the first display color and the background color is the maximum gradation difference.

According to this embodiment, as hereinabove described, the main CPU 101 is configured to perform the control of calculating the square root of the sum of the squares of the gradation differences between the respective ones of the three colors from the gradation difference between the first display color and the background color in the respective ones of the three colors and dividing the calculated square root of the sum of the squares by the maximum gradation difference. Thus, the main CPU 101 can calculate a proper mixing ratio from the square root of the sum of the squares of the gradation difference between the first display color and the background color in the respective ones of the three colors.

According to this embodiment, as hereinabove described, the main CPU 101 is configured to perform the control of averaging the second display color of the prescribed frame with that of the frame immediately preceding the prescribed frame, adjusting the same to the third display color and displaying the information in the third display color when the gradation difference between the second display colors of the prescribed frame and the frame immediately preceding the same is at least the prescribed value. Thus, the main CPU 101 can adjust the second display color of the prescribed frame to the color (third display color) intermediate between the second display colors of the prescribed frame and the frame immediately preceding the same also when the background 160 (background color) abruptly changes, whereby the main CPU 101 can effectively reduce uncomfortableness of the user.

According to this embodiment, as hereinabove described, the main CPU 101 is configured to perform the control of adjusting the display color of the prescribed frame to the second display color and displaying the information in the second display color when the gradation difference between the second display colors of the prescribed frame and the frame immediately preceding the same is less than the prescribed value. Thus, the main CPU 101 can properly adjust the first display color to the second display color when the background 160 (background color) does not abruptly change.

According to this embodiment, as hereinabove described, the laser beam scanning portion 109 is configured to be capable of projecting the plurality of different informations 61b and 62b on the windshield 20, and the main CPU 101 is configured to perform the control capable of independently adjusting the first display color every plurality of different informations 61b and 62b and displaying the informations 61b and 62b in the adjusted display color when displaying the plurality of different informations 61b and 62b. Thus, the main CPU 101 can independently adjust the first display colors to be easily visually recognizable and display the informations 61b and 62b in the first display colors every plurality of different informations 61b and 62b also when displaying the plurality of different informations 61b and 62b.

According to this embodiment, as hereinabove described, the camera 120 is configured to detect the background color visually recognized by the user at the prescribed time interval, and the main CPU 101 is configured to perform the control of adjusting the first display color on the basis of the background color detected by the camera 120 at the prescribed time interval and the first display color and displaying the information in the adjusted display color. Thus, the main CPU 101 can adjust the first display color to be easily visually recognizable by adding the background color changing with time to the first display color and display the information in the adjusted display color also when the background momently changes with time.

According to this embodiment, as hereinabove described, the main CPU 101 is configured to perform the control of adjusting the first display color on the basis of the background color detected by the camera 120 and the first display color and displaying the information on the windshield 20 in the adjusted display color. Thus, the main CPU 101 can adjust the first display color to be easily visually recognizable by adding the background color detected by the camera 120 to the basic first display color originally initialized in the HUD 1 and display the information in the adjusted display color also when the HUD 1 is provided on the car 50.

According to this embodiment, as hereinabove described, the main CPU 101 is configured to interrupt the control of adjusting the first display color on the basis of the background color detected by the camera 120 and the first display color and displaying the information in the adjusted display color and to preferentially display the information related to the abnormality when detecting the occurrence of the abnormality in the car 50. Thus, the main CPU 101 can provide the user with the information related to the abnormality upon the occurrence of the abnormality in the car 50.

Although the present invention has been described and illustrated in detail, it is clearly understood that the same is by way of illustration and example only and is not to be taken by way of limitation, the spirit and scope of the present invention being limited only by the terms of the appended claims.

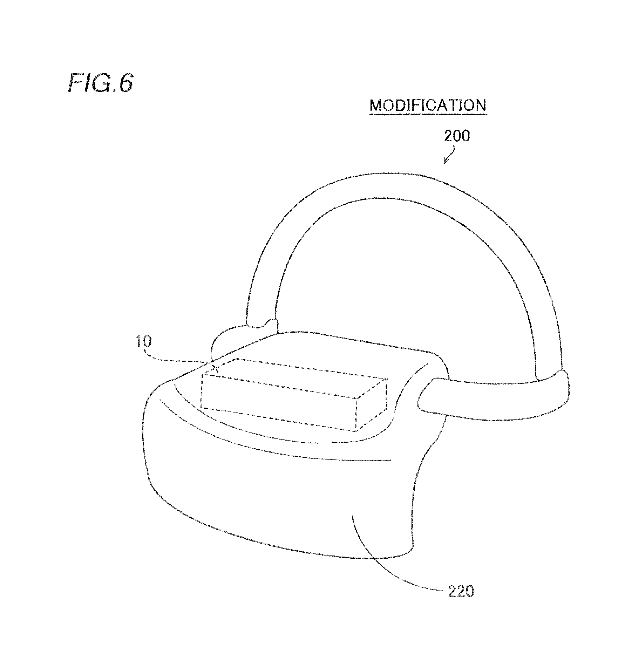

For example, while the HUD is loaded on the car in the aforementioned embodiment, the present invention is not restricted to this. According to the present invention, the HUD may alternatively be loaded on a transportation apparatus, such as an aircraft, for example, other than the car. Further, an HUD 200 may be configured to be attached to the user's head, as in a modification shown in Fig. 6. In this case, the user visually recognizes information displayed on a display board 220 arranged in front of his/her gaze.

While the HUD is built into the car (mounted on the car in the process of manufacturing thereof) in the aforementioned embodiment, the present invention is not restricted to this. According to the present invention, the HUD may alternatively be set on the car as after-market equipment.

While the main CPU adjusts the second display color of the prescribed frame to the third display color by averaging the same with the second display color of the frame immediately preceding the prescribed frame when the gradation difference between the second display colors of the prescribed frame and the frame immediately preceding the same is at least the prescribed value, the present invention is not restricted to this. According to the present invention, the main CPU may alternatively adjust the second display color of the prescribed frame to a display color, corresponding to the average between the second display colors of the prescribed frame and the frame immediately preceding the same, other than the third display color when the gradation difference between the second display colors of the prescribed frame and the frame immediately preceding the same is at least the prescribed value.

While the main CPU adjusts the second display color to the third display color in all frames when the gradation difference between the second display colors of the prescribed (current) frame and the frame immediately preceding the same is at least the prescribed value, the present invention is not restricted to this. According to the present invention, the main CPU may alternatively adjust the second display color to the third display color in frames at a prescribed interval (in every fifth frame, for example). Thus, a load on the control portion can be reduced, dissimilarly to the case of adjusting the second display color to the third display color in all frames.

While the color information is the gradation in the aforementioned embodiment, the present invention is not restricted to this. According to the present invention, the color information may alternatively be information other than the gradation.

While the processing of the control portion according to the present invention is described with reference to the flow chart of a flow-driven type successively performing processing along the processing flow in the aforementioned embodiment for the convenience of illustration, the present invention is not restricted to this. According to the present invention, the control portion may alternatively perform event-driven processing every event. In this case, the control portion may perform complete event-driven processing, or a combination of event-driven processing and flow-driven processing.

**Claims**

1. A headup display (1) comprising:

   a projection portion (109) projecting prescribed information (61b, 62b) initialized to a first display color on a display board (20) arranged in a user's gaze direction;
   a detection portion (120) detecting a background color visually recognized by the user through the display board; and
   a control portion (101) performing control of adjusting the first display color on the basis of the background color detected by the detection portion and the first display color and displaying the prescribed information in the adjusted display color.

2. The headup display according to claim 1, wherein
   the control portion is configured to perform control of adjusting the first display color to a second display color on the basis of the difference between the background color detected by the detection portion and the first display color and displaying the prescribed information in the second display color.

3. The headup display according to claim 2, wherein
   the control portion is configured to perform the control of adjusting the first display color to the second display color by acquiring the complementary color of the background color and mixing the acquired complementary color of the background color and the first display color with each other on the basis of the difference between the background color and the first display color and displaying the prescribed information in the second display color.

4. The headup display according to any of claims 1 to 3, wherein
   the first display color is initialized by employing at least one of components of three colors of red, blue and green,
   the detection portion is configured to detect the background color with at least one of the components of the three colors, and
   the control portion is configured to perform control of adjusting the first display color by employing at least one of the components of the three colors on the basis of the background color detected by the detection portion with at least one of the components of the three colors and the first display color initialized by employing at least one of the components of the three colors and displaying the prescribed information in the adjusted display color.

**5.** The headup display according to claim 3 or 4, wherein
the control portion is configured to perform control of calculating a mixing ratio for mixing the acquired complementary color of the background color and the first display color with each other on the basis of the difference between the background color and the first display color and mixing the complementary color of the background color and the first display color with each other on the basis of the calculated mixing ratio.

**6.** The headup display according to claim 5, wherein
the control portion is configured to perform control of calculating the mixing ratio by dividing the gradation difference between the first display color and the background color by the gradation difference, corresponding to the maximum gradation difference, between a prescribed color and the complementary color of the prescribed color and mixing the complementary color of the background color and the first display color with each other in response to the mixing ratio.

**7.** The headup display according to claim 6, wherein
the first display color is initialized by employing at least one of components of three colors of red, blue and green,
the detection portion is configured to detect the background color with at least one of the components of the three colors, and
the control portion is configured to perform the control of calculating the mixing ratio by calculating the square root of the sum of the squares of gradation differences between the respective ones of the three colors from the gradation difference between the first display color and the background color in the respective ones of the three colors and dividing the calculated square root of the sum of the squares by the maximum gradation difference.

**8.** The headup display according to any of claims 1 to 7, wherein
the control portion is so configured, when the gradation difference between a second display color of a prescribed frame and the second display color of a frame immediately preceding the prescribed frame is at least a prescribed value, as to perform control of adjusting the second display color of the prescribed frame to a display color between the second display color of the prescribed frame and the second display color of the frame immediately preceding the prescribed frame and displaying the prescribed information in the adjusted display color.

**9.** The headup display according to claim 8, wherein
the control portion is configured to perform control of adjusting a display color of the prescribed frame to the second display color and displaying the prescribed information in the second display color when the gradation difference between the second display color of the prescribed frame and the second display color of the frame immediately preceding the prescribed frame is less than the prescribed value.

**10.** The headup display according to claim 8 or 9, wherein
the control portion is configured to perform control of averaging the second display color of the prescribed frame with the second display color of the frame immediately preceding the prescribed frame, adjusting the second display color to a third display color and displaying the prescribed information in the third display color when the gradation difference between the second display color of the prescribed frame and the second display color of the frame immediately preceding the prescribed frame is at least the prescribed value.

**11.** The headup display according to any of claims 1 to 10, wherein
the projection portion is configured to be capable of projecting a plurality of different informations on the display board, and
the control portion is configured to perform control capable of independently adjusting the first display color every plurality of different informations and displaying the informations in the adjusted display color when displaying the plurality of different informations.

**12.** The headup display according to any of claims 1 to 11, wherein
the detection portion detects the background color visually recognized by the user at a prescribed time interval, and
the control portion is configured to perform control of adjusting the first display color on the basis of the background color detected by the detection portion at the prescribed time interval and the first display color and displaying the prescribed information in the adjusted display color.

**13.** The headup display according to any of claims 1 to 12, wherein
the display board is a windshield of a car arranged in the user's gaze direction, and
the control portion is configured to perform control of adjusting the first display color on the basis of the background color detected by the detection portion and the first display color and displaying the prescribed information on the windshield in the adjusted display color.

14. The headup display according to claim 13, wherein the control portion is so configured, at least when detecting occurrence of an abnormality in the car, as to interrupt the control of adjusting the first display color on the basis of the background color detected by the detection portion and the first display color and displaying the prescribed information in the adjusted display color and to preferentially display information related to the abnormality.

15. A display method for a headup display (1) comprising steps of:

projecting prescribed information (61b, 62b) initialized to a first display color on a display board (20) arranged in a user's gaze direction;
detecting a background color visually recognized by the user through the display board with a detection portion (120); and
adjusting the first display color on the basis of the background color detected by the detection portion and the first display color and displaying the prescribed information in the adjusted display color.

*FIG.1*

USER'S GAZE

*FIG.2*

OSAKA　KOBE
1.0km

## FIG.3

## FIG.4

CALCULATE GRADATION DIFFERENCE BETWEEN
BACKGROUND COLOR OF BACKGROUND REGION
AND FIRST DISPLAY COLOR OF INFORMATION

CALCULATE SECOND DISPLAY COLOR

MIX FIRST DISPLAY COLOR AND COMPLEMENTARY COLOR
WITH EACH OTHER TO INCLUDE FIRST DISPLAY COLOR
IN LARGE QUANTITY IF GRADATION DIFFERENCE IS LARGE
AND TO INCLUDE COMPLEMENTARY COLOR IN LARGE QUANTITY
IF GRADATION DIFFERENCE IS SMALL

## FIG.5

DISPLAY COLOR ADJUSTMENT FLOW

START

**S1** ACQUIRE BACKGROUND REGION

**S2** CALCULATE BACKGROUND COLOR

**S3** CALCULATE GRADATION DIFFERENCE BETWEEN FIRST DISPLAY COLOR AND BACKGROUND COLOR

**S4** CALCULATE MIXING RATIO

**S5** CALCULATE SECOND DISPLAY COLOR

**S6** CALCULATE GRADATION DIFFERENCE BETWEEN SECOND DISPLAY COLORS OF CURRENT FRAME AND FRAME IMMEDIATELY PRECEDING CURRENT FRAME

**S7** GRADATION DIFFERENCE ≥ PRESCRIBED VALUE? — No

Yes

**S8** DISPLAY INFORMATION IN THIRD DISPLAY COLOR OBTAINED BY AVERAGING SECOND DISPLAY COLOR OF CURRENT FRAME WITH THAT OF FRAME PRECEDING CURRENT FRAME

**S9** DISPLAY INFORMATION IN SECOND DISPLAY COLOR OF CURRENT FRAME

17

FIG.6

MODIFICATION

200

10

220

Europäisches
Patentamt

European
Patent Office

Office européen
des brevets

# EUROPEAN SEARCH REPORT

Application Number

EP 14 15 3862

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2007/013495 A1 (SUZUKI ISAMU [JP] ET AL) 18 January 2007 (2007-01-18) * paragraphs [0028], [0038]; claims 1-4 * ----- | 1-15 | INV. G02B27/01 G01C21/36 G09G5/00 |
| X | US 2012/038663 A1 (GUSTAFSSON HARALD [SE] ET AL) 16 February 2012 (2012-02-16) * paragraphs [0036] - [0039], [0056], [0057], [0060] * ----- | 1-15 | |
| X | JP 2005 138801 A (CALSONIC KANSEI CORP) 2 June 2005 (2005-06-02) * the whole document * ----- | 1-15 | |
| X,D | JP 2010 149734 A (YAZAKI CORP; TOYOTA MOTOR CORP) 8 July 2010 (2010-07-08) * abstract * ----- | 1,15 | |

TECHNICAL FIELDS
SEARCHED    (IPC)

G02B
G01C
G09G

The present search report has been drawn up for all claims

| Place of search | Date of completion of the search | Examiner |
|---|---|---|
| Munich | 22 May 2014 | Rödig, Christoph |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.** EP 14 15 3862

This annex lists the patent family members relating to the patent documents cited in the above-mentioned European search report.
The members are as contained in the European Patent Office EDP file on
The European Patent Office is in no way liable for these particulars which are merely given for the purpose of information.

22-05-2014

| Patent document cited in search report | | Publication date | Patent family member(s) | | Publication date |
|---|---|---|---|---|---|
| US 2007013495 | A1 | 18-01-2007 | CN | 1880919 A | 20-12-2006 |
| | | | DE | 102006027679 A1 | 21-12-2006 |
| | | | JP | 4882285 B2 | 22-02-2012 |
| | | | JP | 2006350617 A | 28-12-2006 |
| | | | US | 2007013495 A1 | 18-01-2007 |
| US 2012038663 | A1 | 16-02-2012 | EP | 2603829 A2 | 19-06-2013 |
| | | | US | 2012038663 A1 | 16-02-2012 |
| | | | WO | 2012019973 A2 | 16-02-2012 |
| JP 2005138801 | A | 02-06-2005 | NONE | | |
| JP 2010149734 | A | 08-07-2010 | JP | 5197349 B2 | 15-05-2013 |
| | | | JP | 2010149734 A | 08-07-2010 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010149734 A